# EUROPEAN PATENT SPECIFICATION

(11) **EP 1 862 908 B1**
(45) Date of publication and mention of the grant of the patent: **12.08.2009**
(21) Application number: 06114732.8
(22) Date of filing: 30.05.2006
(51) Int. Cl.: G06F 12/14

(54) **Integrated circuit arrangement, a method for monitoring access requests to an integrated circuit arrangement component of an integrated circuit arrangement and a computer program product**
Integrierte Schaltungsanordnung, Verfahren zur Überwachung von Zugriffsanfragen an eine Komponente einer integrierten Schaltungsanordnung und Computerprogrammprodukt
Aménagement de circuit intégré, procédé de surveillance des demandes d'accès pour un composant d'aménagement de circuit intégré et produit de programme informatique

(43) Date of publication of application: 05.12.2007
(73) Proprietor: Infineon Technologies AG, 81669 München (DE)
(72) Inventor: Jennings, David, 81377, München (DE); Knight, Richard, Stroud, Gloucestershire GL6 7RL (GB)
(74) Representative: Viering, Jentschura & Partner

(56) References cited:
- DE-A1- 19 502 626
- US-A- 5 754 762
- US-A- 6 047 388

## Description

The invention relates to an integrated circuit arrangement, a method for monitoring access requests to an integrated circuit arrangement component of an integrated circuit arrangement and a computer program product.

A secure execution environment within a integrated circuit arrangement comprising a central microprocessor and a plurality of further circuit arrangement components such as memories or the like requires that defined regions of a shared memory can be protected against access (read and/or write) from non-trusted processes, processors or data moving engines within the system, i.e. within the integrated circuit arrangement.

A common secure execution environment is the so called TrustZone environment from ARM Ltd. This solution increases silicon area and cannot be re-used for debug purposes.

Because of the complexity of SoC (System on Chip) systems, it is common to have some type of debug watchpoint/breakpoint on the internal buses of an integrated circuit arrangement, which may be implemented as a chip. This allows on-chip data movements to be monitored for debug purposes. Such watchpoint/breakpoint units are often implemented as a set of programmable address registers which are combined with programmable registers indicating the master or process which initiated the bus transaction (e.g. HMASTER or HPROT signals of the AHB protocol (Advanced High-Performance Bus protocol). Bus accesses are compared with the programmed values. If the master and addresses match the register values (or in some cases match addresses in the range between two programmed register values), then a debug break condition occurs. Typically such a debug trap would halt the processor to allow interactive debug to commence.

In the document US-A-5 754 762 an architecture is described where a plurality of computer system components are coupled via a computer bus and wherein memory boundaries may be defined for application programs. When an application program tries to access the memory via the computer bus, it is determined whether the memory area to be accessed has an address that lies within the defined boundaries. If it does not lie within the boundaries, an interrupt is triggered to stop the memory access.

The document US-A-6 047 388 describes a computer system in which it may be checked for a memory request whether the request address is within a stored address range. If the address is not within the address range, the address is considered as being invalid and an interrupt is issued.

In DE 195 02 626 A1 a data processing system is described having an address register for storing an upper boundary and an address register for storing a lower boundary and a comparator which checks in case of a memory access whether the access address lies with the address range defined by the boundaries. In case of an access to an address that is not within the address range, an interrupt signal may be generated for a central unit.

According to an embodiment of the invention, an integrated circuit arrangement is provided, comprising a plurality of circuit arrangement components, at least one coupler coupling the circuit arrangement components comprising, for each circuit arrangement component a computer bus that is associated with the circuit arrangement component and via which the circuit arrangement component may be accessed wherein for each computer bus an address range may be set independently of the address ranges set for the other computer busses and a coupler watcher checking as to whether an access request to a circuit arrangement components has a request address, that identifies at least a part of the circuit arrangement component, to which access is requested, that lies within the address range set for the computer bus associated with the circuit arrangement component to which the access is requested, and, dependent on whether the request address lies within the predetermined address range, the coupler watcher accepts the access request or generates a false access signal.

According to another embodiment of the invention, a method for monitoring access requests to an integrated circuit arrangement component of an integrated circuit arrangement, comprising a plurality of circuit arrangement components and at least one coupler coupling the circuit arrangement components, comprising, for each circuit arrangement component a computer bus that is associated with the circuit arrangement component and via which the circuit arrangement component may be accessed wherein for each computer bus an address range may be set independently of the address ranges set for the other computer busses, is provided. The method comprises receiving an access request to a circuit arrangement components, determining a request address that identifies at least a part of the circuit arrangement component, to which access is requested, checking, by a common coupler watcher of the integrated circuit arrangement, as to whether the request address lies within the address range set for the computer bus associated with the circuit arrangement component to which the access is requested, and dependent on whether the request address lies within the predetermined address range, accepting the access request or generating a false access signal.

According to still another embodiment of the invention, a computer program product is provided for monitoring access requests to an integrated circuit arrangement component of an integrated circuit arrangement, comprising a plurality of integrated circuit arrangement components and at least one coupler coupling the circuit arrangement components, comprising, for each circuit arrangement component a computer bus that is associated with the circuit arrangement component and via which the circuit arrangement component may be accessed wherein for each computer bus an address range may be set independently of the address ranges set for the other computer busses, the computer program product, when being executed by a processor, comprising the above described method.

According to an embodiment of the invention, one advantage may be seen in that a common interrupt mechanism, which usually is used for providing access to an integrated circuit arrangement component, is now provided for access control and, e.g. in response to an unauthorized access request to an integrated circuit arrangement component, generates a false access signal and, e.g. resets the integrated circuit arrangement in order to protect it, thereby providing a secure execution environment.

This is achieved with little or no impact on silicon area and therefore hardware cost.

In accordance with one embodiment of the invention, hardware may be used which is already likely to exist within the system (i.e. the integrated circuit arrangement), but can be used for other purposes, namely for access control purposes.

According to one embodiment of the invention, the same functionality can be reused to provide a simple but effective secure execution environment. In a secure operation mode the address registers would only be able to be initialized by the trusted process. It can program address regions into the registers which cannot subsequently be changed by non-trusted processes. When the bus debug system is used in this mode, any address/master match condition may cause a soft reset of the system (instead of the usual debug trap), an interrupt, or removal of access to some hardware resources. Consequently this technique could be used to prevent any accesses of the sensitive memory region by non-trusted masters. Using this protection scheme alongside key management and encryption techniques, it is possible to implement a secure execution environment in any multiprocessor/multimaster system.

The described embodiments of the invention can be implemented in hardware, i.e. by means of one or a plurality of special integrated circuit(s), in software, i.e. by means of one or a plurality of computer programs, or in an arbitrary hybrid form, i.e. in any partitioning partly in hardware and partly in software.

The described embodiments of the invention relate to the integrated circuit arrangement, the method for monitoring access requests to an integrated circuit arrangement component of an integrated circuit arrangement as well as to the computer program product, as appropriate.

According to one exemplary embodiment of the invention, the plurality of circuit arrangement components comprising at least one circuit arrangement component of a group selected from:
- volatile memory,
- non-volatile memory,
- memory controller,
- microprocessor,
- digital signal processor,
- system control logic,
- mobile radio communication module,
- crypto engine,
- serial interface,
- parallel interface,
- periphery component driver.

Furthermore, in accordance with another embodiment of the invention, where at least one coupler comprises at least one data bus.

In accordance with yet another embodiment of the invention, the at least one coupler has at least one address bus.

In general, the at least one coupler may have any number of control buses, data buses or address buses. In one embodiment, the at least one coupler may comprise one or more on-chip buses for one or a plurality of on-chip memory, e.g. volatile memory or non-volatile memory. Furthermore, the at least one coupler may comprise one or more on-chip buses for one ore a plurality of chip-external memory, e.g. volatile memory or non-volatile memory. Moreover, the at least one coupler may comprise one or more on-chip peripheral control buses for controlling one ore a plurality of peripheral units, e.g. a hard disk, a keyboard, a computer mouse, a trackball, any other input/output devices, one or more display devices, other communication modules, e.g. radio communication modules or the like.

According to another embodiment of the invention, the coupler watcher, e.g. the bus watcher, comprises one or a plurality of address registers storing at least one address that forms the address range, e.g. the address range of a memory as a circuit arrangement component, wherein the portion of the memory identified by the address range is sensitive and should be protected.

Furthermore, the address range may be a range selected from a group consisting of the following address ranges:
- an address range including all addresses that are higher than a predetermined address,
- an address range including all addresses that are equal to or higher than a predetermined address,
- an address range including all addresses that are lower than a predetermined address,
- an address range including all addresses that are equal to or lower than a predetermined address,
- an address range including all addresses that lie between a first predetermined address and a second predetermined address,
- an address range including all addresses that lie between a first predetermined address and a second predetermined address, including the first predetermined address and the second predetermined address,
- an address range including all addresses that lie outside an address interval that is determined by a first predetermined address and a second predetermined address,
- an address range including all addresses that lie outside an address interval that is determined by a first predetermined address and a second predetermined address, including the first predetermined address and the second predetermined address.

According to another embodiment of the invention, the coupler watcher further checks as to whether an access request to one or a plurality of the circuit arrangement components has a request address that lies within another predetermined address range, and, dependent on whether the request address lies within the other predetermined address range, the coupler watcher generates an access interrupt signal for granting access to the circuit arrangement component.

In other words, the coupler watcher may function as a security access control device as well as a common bus watcher for providing access to the respective components of the integrated circuit arrangement.

The false access signal may be an access interrupt signal.

In accordance with another embodiment of the invention, a security controller may be provided denying the access to the circuit arrangement component in response to the response of the false access signal. This has the advantage that a secure and easy access control mechanism is provided.

Furthermore, the security controller may be configured to reset (e.g. re-boot) the integrated circuit arrangement to a predetermined status (e.g. a new boot status).

These and other features of the invention will be better understood when taken in view of the following drawings and a detailed description.
- Figure 1: illustrates a mobile radio communication device in accordance with an embodiment of the present invention;
- Figure 2: illustrates a processor system of the mobile radio communication device in accordance with an embodiment of the present invention;
- Figure 3: illustrates a bus watcher of the mobile radio communication device in accordance with an embodiment of the present invention;
- Figure 4: illustrates a flow diagram showing the method for monitoring access requests to an integrated circuit arrangement component of an integrated circuit arrangement of the mobile radio communication device in accordance with an embodiment of the present invention;
- Figure 5: illustrates a block diagram showing the structure of a bus watcher of the mobile radio communication device in accordance with an embodiment of the present invention; and
- Figure 6: illustrates a block diagram showing the breakpoint generation for one bus of the mobile radio communication device in accordance with an embodiment of the present invention.

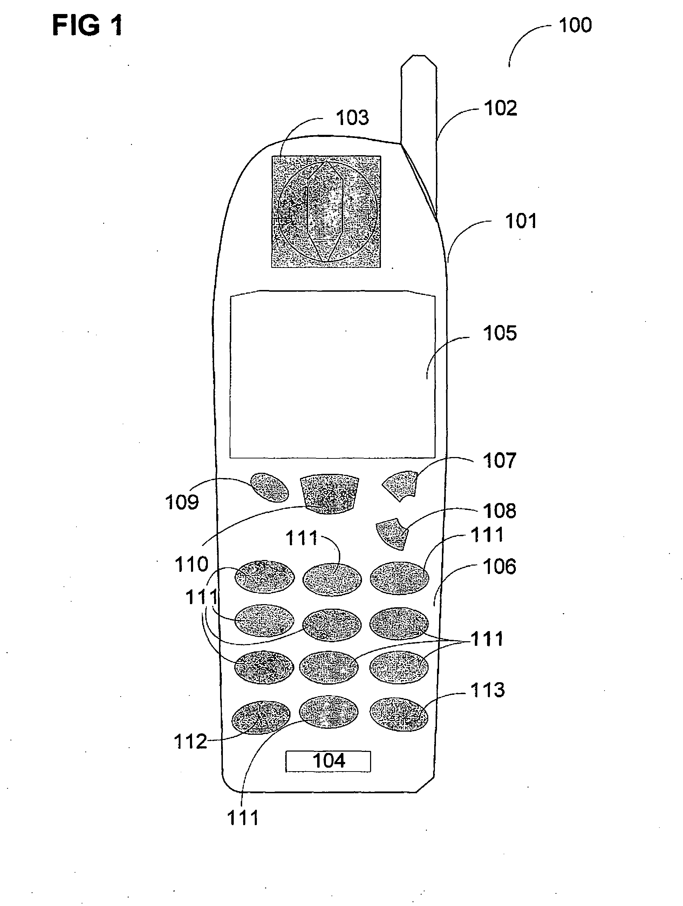

**Figure 1** shows a mobile radio communication device 100 in accordance with an exemplary embodiment of the invention. The mobile radio communication device 100 is configured to provide the communication protocol stacks and functions in accordance with a desired mobile radio communication standard, e.g. a mobile radio communication standard of the second generation such as GSM (Global System Mobile), or a mobile radio communication standard of the third generation, e.g. a mobile radio communication standard according to a 3GPP (3^{rd} Generation Partnership Project) standard or according to a 3GPP2 standard.

The mobile radio communication device 100 may be configured to provide the communication protocol stacks and functions in accordance with one of the following mobile radio communication standards:
- Universal Mobile Telecommunications System (UMTS),
- General Packet Radio Services (GPRS),
- Enhanced Data-Rates for GSM Evolution (EDGE),
- Code Division Multiple Access 2000 (CDMA2000),
- Freedom of Mobile Multimedia Access (FOMA).

The mobile radio communication device 100 has a housing 101 and an antenna 102 coupled to the housing 101. Furthermore, the mobile radio communication device 100 has the common components of a mobile radio communication device such as a loudspeaker 103, a microphone 104, a display 105 and an array of keys 106. The key array 106 comprises function keys 107, 108, 109, 110 such as a communication connection setup key 107, a communication connection termination key 108, a general function key 109 or a menu control key 110. Furthermore, numerical keys 111 are provided in the key array 106 as well as a "*"-key 112 and a "#"-key 113.

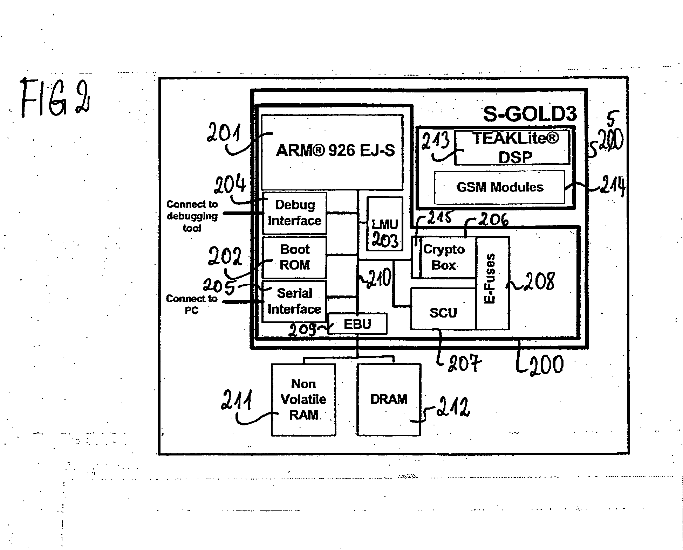

Furthermore, the mobile radio communication device 100 has a processor system 250 as shown in **figure 2****.**

Thus, figure 2 illustrates a processor system 250 of the mobile radio communication device 100 in accordance with an embodiment of the present invention. The processor system 250 comprises a processor chip 200 and a digital signal processor 213 and one or a plurality of mobile radio communication modules 214.

The processor chip 200 comprises a microprocessor 201, in accordance with one embodiment of the invention, an ARM 926 EJ-S microprocessor 201, a boot read only memory (ROM) 202 that includes at least a part of the boot routine for booting the processor chip 200. Furthermore, a volatile on-chip local memory unit 203 is provided, for example a dynamic random access memory (DRAM).

The processor chip 200 further includes one or a plurality of interfaces, e.g. a debug interface 204 which enables a connection to a debugging tool, a serial interface 205 such as a Universal Serial Bus (USB) interface or a Universal Asynchronous Receiver Transmitter (UART) interface, which, e.g. provides a connection to a personal computer or a workstation, generally speaking, to a chip-external computer. The serial interface 205 can be used for loading computer programs onto the mobile radio communication device 100. A further interface that is provided is an external bus unit interface 209 for communication with chip-external memories such as a chip-external non-volatile memory 211 such as a flash memory or a chip-external volatile memory 212 such as a chip-external dynamic random access memory (DRAM).

The processor chip 200 further includes a crypto engine 206 that provides one or a plurality cryptographic functions such as
- a symmetric encryption/decryption function, e.g. DES (Data Encryption Standard), 3DES (Triple Data Encryption Standard) or AES (Advanced Encryption Standard),
- an asymmetric encryption/decryption function, e.g. RSA,
- a one-way hash-function, e.g. MD5 or SHA-1 (Secure Hash Algorithm 1),
- a random number generation function.

The crypto engine 206 may comprise respective hardware accelerators for the implemented cryptographic function(s). The access to the crypto engine 206 is controlled by means of a crypto engine access control means 215.

The processor chip 200 further includes a system control unit 207. The system control unit 207 is a central unit containing logic to control the functionality of several components of the processor chip 200.

Further, electric fuses (e-fuses) 208 are provided for use in the crypto engine 206 and the system control unit 207. The e-fuses 208 are used to store unique/customizing information on the processor chip 200. Each e-fuse 208 is a single bit of information which can be set to a value after the processor chip 200 has been fabricated. A special tool is usually used to set the value (or blow the respective e-fuse 208). Once an e-fuse 208 has been blown, it cannot be changed anymore.

The processor chip 200 makes use of the e-fuses 208 so that the processor chip 200 behavior can be customized in a non-volatile and secure manner for the mobile radio communication device 100. The system control unit 207 contains a unique fuse ID for each processor chip 200, which is usually blown by the processor chip 200 manufacturer.

The microprocessor 201, the boot ROM 202, the on-chip local memory 203, the debug interface 204, the serial interface 205, the crypto engine 206, the system control unit 207 and the external bus interface 209 are connected with each other by means of an on-chip bus unit 210, the structure of which will be described in more detail below.

According to this embodiment of the invention, the digital signal processor 213 is a TEAKLite digital signal processor, although any other suitable digital signal processor may be used in alternative embodiments of the invention.

According to this embodiment of the invention, the at least one mobile radio communication module 214 is configured to provide the basic functions of a mobile radio protocol stack, for example according to GSM, alternatively or in addition according to a mobile radio protocol stack of the third generation such as one of the mobile radio communication standards that have been described above.

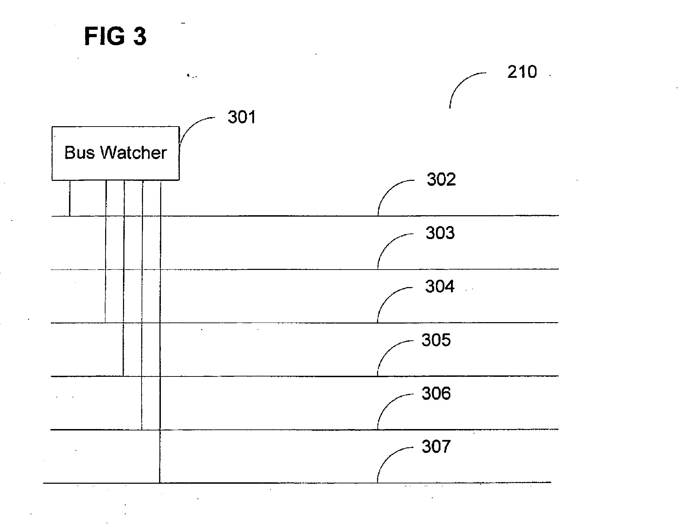

**Figure 3** shows the on-chip bus unit 210 in more detail. As shown in Figure 3, the on-chip bus unit 210 comprises a bus watcher 301, which is configured to listen to the signals that are transmitted via the respective bus the on-chip bus unit 210 is connected to. The operation of the bus watcher 301 will be described in more detail below.

Furthermore, the on-chip bus unit 210 comprises a plurality of buses, for example one or more memory buses for transmitting signals from and to one or more memories, or one or more control buses for transmitting control signals to one or more peripheral units.

According to this embodiment of the invention, the on-chip bus unit 210 comprises two memory buses, one first memory bus 302, in the following also referred to as AHB (ARM Data), for transmitting signals from and to one or more chip-internal (on-chip) memories, in this case the local memory 203, and one second memory bus 303, in the following also referred to as AHB_FLASH, for transmitting signals from and to one or more chip-external memories, in this case the non-volatile memory 211 and/or the volatile chip-external DRAM 212.

According to this embodiment of the invention, the on-chip bus unit 210 further comprises four buses 304, 305, 306, 307, namely
- a first bus 304, in the following also referred to as AHB (ARM Inst), for fetching instructions from memory for the microprocessor 201,
- a second bus 304, in the following also referred to as AHB (ARM Data), for the microprocessor to read and write data,
- a third bus 305, in the following also referred to as AHB (DMA1 Data), for the DMA controller to read and write data
- a fourth bus 306, in the following also referred to as AHB (DMA2 Data), for the DMA controller to read and write data,
- a fifth bus 307, in the following also referred to as AHB (Grafic Data), for graphic display components to read and write data (not shown), e.g. the display 105.

In an embodiment of the invention, the buses 302, 303, 304, 305, 306, 307 are AHB buses (Advanced High-Performance Bus).

The microprocessor 201 is coupled to each of the buses 302, 304, 305, 306, 307. Furthermore, the bus watcher 301 is also coupled to each of the buses 302, 303, 304, 305, 306, 307 except for the second memory bus 303, for which no bus watcher monitoring is provided.

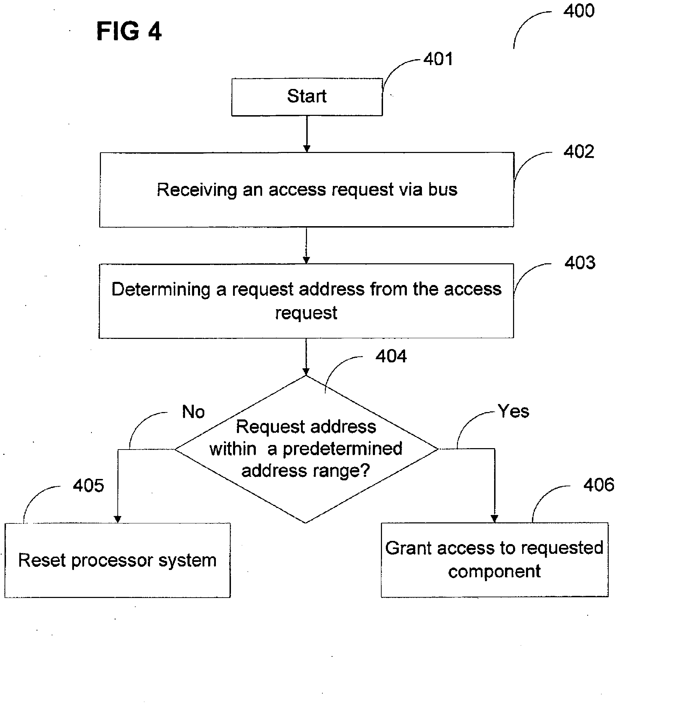

**Figure 4** illustrates a flow diagram 400 showing the method for monitoring access requests to an integrated circuit arrangement component of an integrated circuit arrangement of the mobile radio communication device in accordance with an embodiment of the present invention. According to an embodiment of the invention, the method is carried out by the bus watcher 301.

After the initialization of the bus watcher 301, the access control method according to an embodiment of the invention is started (step 401). After start, the bus watcher 301 listens to the buses that it is connected to in order to receive access request signals (in other words access request messages according to the respectively used bus communication protocol), with which access to one of the connected components of the processor system 250 is requested.

If the coupler watcher, e.g. the bus watcher 301 receives an access request message via any of the connected buses 302, 303, 304, 305, 306, 307, it parses the request address from the received access request message (step 403). The request address identifies at least a part of the circuit arrangement component, to which access is requested, e.g. the request address identifies the component or, e.g. in case that the component is a memory, the request address identifies a region (e.g. a sector, block, etc.) of the addressed memory. After having determined the request address, the coupler watcher, e.g. the bus watcher 301, determines whether the determined request address lies within a predetermined address range (step 404), wherein the address range can be set by the user for each bus and/or each component independently.

The address range may be a range selected from a group consisting of the following address ranges:
- an address range including all addresses that are higher than a predetermined address (in other words, in this case, a first threshold value is pre-set and it is determined whether the determined request address has a value that is higher than the first threshold value),
- an address range including all addresses that are equal to or higher than a predetermined address (in other words, in this case, a first threshold value is pre-set and it is determined whether the determined request address has a value that is equal to or higher than the first threshold value),
- an address range including all addresses that are lower than a predetermined address (in other words, in this case, a second threshold value is pre-set and it is determined whether the determined request address has a value that is lower than the second threshold value),
- an address range including all addresses that are equal to or lower than a predetermined address (in other words, in this case, a second threshold value is pre-set and it is determined whether the determined request address has a value that is equal to or lower than the second threshold value),
- an address range including all addresses that lie between a first predetermined address and a second predetermined address (in other words, in this case, a first threshold value and a second threshold value are pre-set and it is determined whether the determined request address has a value that lies in the interval between the first threshold value and the second threshold value, not including the first threshold value and the second threshold value),
- an address range including all addresses that lie between a first predetermined address and a second predetermined address, including the first predetermined address and the second predetermined address (in other words, in this case, a first threshold value and a second threshold value are pre-set and it is determined whether the determined request address has a value that lies in the interval between the first threshold value and the second threshold value, including the first threshold value and the second threshold value),
- an address range including all addresses that lie outside an address interval that is determined by a first predetermined address and a second predetermined address (in other words, in this case, a first threshold value and a second threshold value are pre-set and it is determined whether the determined request address has a value that lies outside the interval between the first threshold value and the second threshold value, not including the first threshold value and the second threshold value),
- an address range including all addresses that lie outside an address interval that is determined by a first predetermined address and a second predetermined address, including the first predetermined address and the second predetermined address (in other words, in this case, a first threshold value and a second threshold value are pre-set and it is determined whether the determined request address has a value that lies outside the interval between the first threshold value and the second threshold value, including the first threshold value and the second threshold value).

If the determined request address does not lie within the predetermined address range ("No" in step 404), the coupler watcher generates a false access signal (step 405). In accordance with one embodiment of the invention, the bus watcher 301 in this case generates a soft reset signal and transmits it to the microprocessor 201, thereby effecting a soft reset or re-boot of the processor system 250. Consequently, e.g. any accesses of a sensitive memory region or even of a sensitive circuit arrangement component by a non-trusted master component can be prevented in a very easy and effective manner.

It should be mentioned, that in addition to this mechanism, key management techniques and encryption techniques, generally speaking, cryptographic techniques may be used for access control to a sensitive memory region or even to a sensitive circuit arrangement component.

If the determined request address lies within the predetermined address range ("Yes" in step 404), the coupler watcher grants access to the requested component or memory region (step 406), e.g. by generating a corresponding access grant signal.

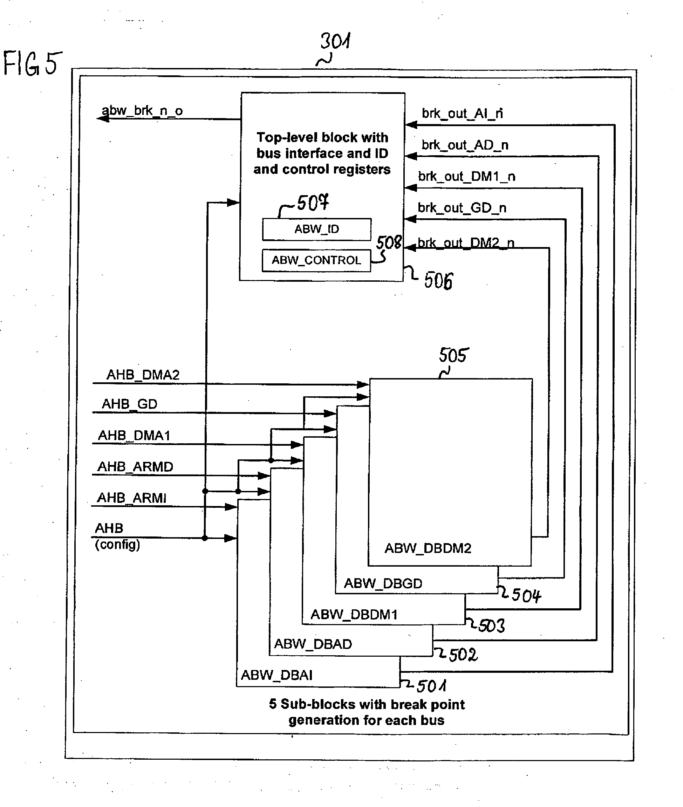

In an embodiment of the invention, the bus watcher 301 contains five identical sub blocks 501, 502, 503, 504, 505 for the five buses 302, 304, 305, 306, 307, the bus watcher 301 is coupled to (see **figure 5****).** Each of the break-point generation sub blocks 501, 502, 503, 504, 505 is assigned to one respectively monitored bus 302, 304, 305, 306, 307.

The names used in the blocks of figure 5 and in the following description are parameterized where necessary with "x":
- for the first memory bus 302 AHB (ARM Data); x = AD;
- for the second control bus 304 AHB (ARM Inst); x = AI;
- for the third control bus 305 AHB (DMA1 Data); x = DM1;
- for the fourth control bus 306 AHB (DMA2 Data); x = DM2;
- for the fifth control bus 307 AHB (Grafic Data); x = GD.

The bus watcher 301 is on one port of the AHB bus matrix comprising the buses 302, 303, 304, 305, 306, 307 and monitors traffic on the following five AHB buses:
- the first memory bus 302;
- the second control bus 304;
- the third control bus 305;
- the fourth control bus 306;
- the fifth control bus 307.

The bus watcher 301 further contains one central block 506 for the AHB configuration interface and global control.

The central block 506 collects the breakpoint requests from the sub blocks 501, 502, 503, 504, 505, can mask them and transfers the break request to either a multicore debug block (not shown) or the system control unit 207. The central block 506 captures the status of the sub block requests to allow the debugger or software to determine the source of the break. If the bus watcher 301 is being used to enforce access restrictions for a security policy as is the case according to an embodiment of the invention, then the break request output may be routed to the system control unit 207. In the event of an attempted access which violates the security restrictions set up in the bus watcher 301, the system control unit 207 can automatically issue a processor chip 200 reset.

The central block 506 contains an ABW_ID register 507 and an ABM_CONTROL register 508.

As described above, there are provided five identical sub blocks 501, 502, 503, 504, 505, one sub block for each bus 302, 304, 305, 306, 307 to be monitored.

Each sub block 501, 502, 503, 504, 505 generates a trap signal brk_out_x dependent on the content of the control registers, which will be described in more detail below, which are provided in the bus watcher 301.

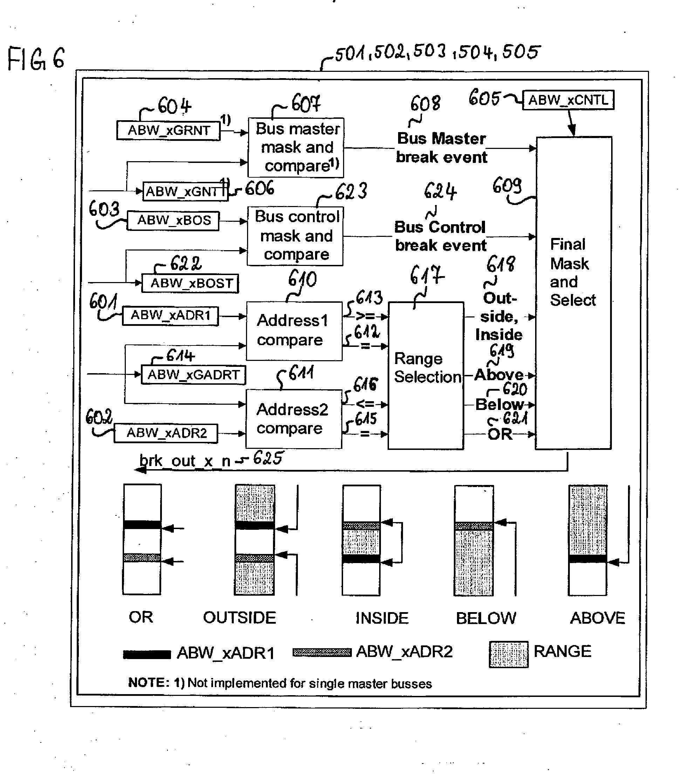

The implementation of the breakpoint logic for one sub bus block 501, 502, 503, 504, 505 is shown in **figure 6****.**

The trap values are defined in the following registers (listed in alphabetic order):
- ABW_xADR1 register 601;
- ABW_xADR2 register 602;
- ABW_xBOS register 603;
- ABW_xGRNT register 604.

The way the conditions are combined is defined by the content of an ABW_XCNTL register 605.

The ABW_XGRNT register 604 contains the mask which is combined with the grant lines HGRANTx from the bus arbiter, which is stored in an additionally provided ABW_xGNTT register 606. This allows any number of masters to be included in the trigger. The content of the ABW_xGRNT register 604 is compared with the content ABW_xGNTT register 606 received from the grant lines HGRANTx (block 607) and, if appropriate, a bus master break event signal 608 is generated and provided to a final mask and select block 609, which is controlled by means of the content of the ABW_xCNTL register 605.

According to this embodiment of the invention, there is only one master (in general, any number of masters can be provided and handled) and the ABW_xGRNT register 604 and the additionally provided ABW_xGNTT register 606 have no function.

The two address registers, namely the ABW_xADR1 register 601 and the ABW_xADR2 register 602, are used to define the address range for the trigger.

Two comparators, e.g. a first comparator 610 for the ABW_xADR1 register 601 and a second comparator 611 for the ABW_xADR2 register 602, are provided.

The first comparator 610 provides an "Is-equal" output 612 and an "Is-larger" output 613, wherein a High signal is provided at the "Is-equal" output 612 in case that the content of the ABW_xADR1 register 601 is equal to the content of an additionally provided ABW_xGADRT register 614 received from the grant lines HGRANTx. In case that the content of the ABW_xADR1 register 601 is not equal to the content of the ABW_xGADRT register 614, a Low signal is provided at the "Is-equal" output 612. Furthermore, a High signal is provided at the "Is-larger" output 613 in case that the content of the ABW_xADR1 register 601 is larger than the content of the additionally provided ABN_xGADRT register 614 received from the grant lines HGRANTx. In case that the content of the ABW_xADR1 register 601 is not larger than the content of the ABW_xGADRT register 614, a Low signal is provided at the "Is-larger" output 613.

The second comparator 611 provides an "Is-equal" output 615 and an "Is-smaller" output 616, wherein a High signal is provided at the "Is-equal" output 615 in case that the content of the ABW_xADR2 register 602 is equal to the content of the ABW_xGADRT register 614 received from the grant lines HGRANTx. In case that the content of the ABW_xADR2 register 602 is not equal to the content of the ABW_xGADRT register 614, a Low signal is provided at the "Is-equal" output 615. Furthermore, a High signal is provided at the "Is-smaller" output 616 in case that the content of the ABN_xADR2 register 602 is smaller than the content of the ABW_xGADRT register 614 received from the grant lines HGRANTx. In case that the content of the ABN_xADR2 register 602 is not smaller than the content of the ABW_xGADRT register 614, a Low signal is provided at the "Is-smaller" output 616.

The outputs 612, 613, 615, 616 of the comparators 610, 611 are connected to a range detection circuit 617. The range detection circuit 617 logically combines the signals provided by the comparators 610, 611 to generate the following signals:
- an outside/inside signal 618, wherein the outside/inside signal 618 has a High signal level if the content of the ABW_xGADRT register 614 lies outside the interval between the values defined by the content of the ABW_xADR1 register 601 and the content of the ABW_xADR2 register 602, and wherein the outside/inside signal 618 has a Low signal level if the content of the ABW_xGADRT register 614 lies inside the interval between the values defined by the content of the ABN_xADR1 register 601 and the content of the ABW_XADR2 register 602;
- an above signal 619, wherein the above signal 619 has a High signal level if the content of the ABN_XGADRT register 614 is larger than the value defined by the content of the ABW_xADR1 register 601 and has a Low signal level if the content of the ABW_xGADRT register 614 is not larger than the value defined by the content of the ABW_xADR1 register 601;
- a below signal 620, wherein the below signal 620 has a High signal level if the content of the ABW_xGADRT register 614 is smaller than the value defined by the content of the ABW_xADR2 register 602 and has a Low signal level if the content of the ABW_xGADRT register 614 is not smaller than the value defined by the content of the ABW_XADR2 register 602;
- an OR signal 621, wherein the OR signal 621 has a High signal level if the content of the ABW_XGADRT register 614 is equal to value defined by the content of the ABW_xADR1 register 601 or if the content of the ABW_xGADRT register 614 is equal to the value defined by the content of the ABW_xADR2 register 602, and has a Low signal level if the content of the ABW_xGADRT register 614 is not equal to value defined by the content of the ABW_xADR1 register 601 and if the content of the ABW_xGADRT register 614 is not equal to the value defined by the content of the ABW_xADR2 register 602.

The generated signals 618, 619, 620, 621 are inputs to the final mask and select block 609, which is controlled by means of the content of the ABN_xCNTL register 605.

The ABW_xBOS register 603 defines a mask and trigger values for the bus operation signals (content of the ABW_xBOST register 622 received from the grant lines HGRANTx) which are driven in the address phase of a bus access (mask and compare operation in block 623). These triggers can be provided as an input to the final mask and select block 609 (e.g. as a bus control break event 624) and can then be combined with address ranges in different ways as defined by the content of the ABW_xCNTL register 605.

The final mask and select block 609 provides an output signal 625 brk_out_x_n which will be on Low signal level for as long as the respective condition is met. This will be a minimum of one AHB block cycle. When the condition is met, the capture registers ABW_xGNTT register 606, ABW_xGADRT register 614 and ABW_xBOST register 622 will be written with the relevant signal values.

Writing to the ARM bit in the DBxCNTL register will rearm the circuitry and set the five capture registers mentioned above to their default values; this also sets the TRIG bit in the DBxCNTL register to the value "1".

In order to comply with the security concept in accordance with an embodiment of the invention, it is provided to have an option to restrict access to the registers which control the bus watcher 301 breakpoints.

In an embodiment of the invention, during a boot sequence, the software can select whether the bus watcher 301 is an open resource or a secure resource. If the bus watcher 301 is to be used as a mechanism for enforcing the security concept, then a newly provided register bit EINIT should be written with a value "1". If the register bit EINIT is not written, the bus watcher 301 remains open and available for unrestricted use or debug by any software. Once the register bit EINIT is set to the value "1", it cannot be subsequently rewritten with the value "0". When the register bit EINIT is set to the value "1", write attempts to the bus watcher registers will only succeed while a signal SEC ACC is asserted. When the signal SEC_ACC is deasserted (i.e. outside a boot or secure phase), write attempts to the bus watcher registers will fail with a bus error response.

In one embodiment of the invention, the following registers are provided, wherein their content has the respective following meaning (listed in alphabetic order):
- ABW_xADR1 register:
   Bus watcher address 1 for sub-block x;
- ABW_XADR2 register:
   Bus watcher address 2 for sub-block x;
- ABW_xADRT register:
   Bus watcher trapped address for sub-block x;
- ABW_xBOS register:
   Bus watcher bus operation signals for sub-block x;
- ABW_xBOST register:
   Bus watcher trapped bus operation signals for sub-block x;
- ABW_xCNTL register:
   Bus watcher control for sub-block x;
- ABW_CONTROL register:
   Control of bus watcher block;
- ABW_xGNTT register:
   Bus watcher trapped grant lines for sub-block x;
- ABM_xGRNT register:
   Bus watcher grant mask for sub-block x;
- ABW_ID register:
   Bus watcher identification register.

The block bus watcher has no extra clock control registers. It runs with the AHB clock.

The field description of the ABW_CONTROL register 50.8 as a status and control register in accordance with an embodiment of the present invention is as shown in table 1 (listed in alphabetic order):

**Table 1: ABW_CONTROL register 508**

| **Field** | **Number of Bits** | **Type** | **Description** |
|---|---|---|---|
| | 1 | R | Reserved - Read as '0' |
| ADM | 1 | Rw | **Mask for brk out AD-n** |
| | | | 1: Break from sub block ABW_DBAD to be used for abw_brk_n_o |
| | | | 0: Break from sub block ABW_DBAD not used for abw_ brk_ n_ o |
| ADS | 1 | R | **Status of brk out AD-n** |
| | | | 0: Break from sub block ABW_DBAD caused abw_brk_n_o |
| | | | 1 No break from sub block ABW DBAD used for abw brk n o |
| AIM | 1 | Rw | **Mask for brk**_**out**_**Al-n** |
| | | | 1 Break from sub block ABW_DBA1 to be used for abw_brk_n_o |
| | | | 0 Break from sub block ABW_DBA1 not used for abw brk n o |
| AIS | 1 | R | **Status of brk out Al-n** |
| | | | 0 Break from sub block ABW_DBA1 caused abw_brk_n_o |
| | | | 1 No break from sub block ABW DBA1 used for abw brk n o |
| DMM1 | 1 | Rw | **Mask for brk_out_DM1-n** |
| | | | 1: Break from sub-block ABW_DBDM1 to be used for abw_brk_n_o |
| | | | 0: Break from sub-block ABN_DBDM1 not used for abw brk n o |
| DMM2 | 1 | Rw | **Mask for brk out DM2-n** |
| | | | 1: Break from sub-block ABN_DBDM2 to be used for abw_brk_n_o |
| | | | 0: Break from sub-block ABW_DBDM2 not used for abw brk n o |
| DMS1 | 1 | r | **Status of brk_out_DMl-n** |
| | | | 0: Break from sub-block ABW DBDM1 |
| | | | caused abw_brk_n_o |
| | | | 1 No break from sub-block ABW DBDM1 used for abw_ brk_ n_ o |
| DMS2 | 1 | R | **Status of brk_out_ DM2-n** |
| | | | 0: Break from sub-block ABW_DBDM2 caused abw_ brk_ n_o |
| | | | 1 No break from sub-block ABW_DBDM2 used for abw_ brk_n_o |
| GDM | 1 | Rw | **Mask for brk out GD-n** |
| | | | 1: Break from sub-block ABW_DBGD to be used for abw_brk_n_o |
| | | | 0: Break from sub-block ABW_DBGD not used for abw_ brk_n_o. |
| GDS | 1 | R | **Status of brk out GD-n** |
| | | | 1: Break from sub-block ABN_DBGD caused abw_brk_n_o |
| | | | 0: No break from sub-block ABW DBGD used for abw_ brk_n_o |
| REARM | 1 | Rw | **Rearms abw_brk_n_o trigger and resets status signals in bits [AIS:ADS:DMS1:DMS2:GDS]:, :** Write '1' to rearm, this bit always reads '0'. |
| Reserved | 1 | | Reserved for additional bus |
| Reserved | 3 | | Reserved for additional buses |
| Reserved | 14 | | Reserved for additional buses |
| SEC_ACCE | 1 | r/w1 | SEC_ACC protect all ABW registers (including this one). |
| | | | Reset state '0' (i.e. all ABW registers can be written regardless of SEC_ACC state) |
| | | | Note: This bit can only be written with '1'. |
| | | | Subsequent attempts to write with '0' will fail. |
| | | | When this bit has been written to '1', any attempt to write to registers when SEC_ACC is deasserted will fail with a bus error. Writes when SEC_ACC is asserted will continue to transfer valid data. |
| TRIG | 1 | R | **State of abw_brk_n_o trigger:** '1' armed / '0' fired, Reset by writing to the REARM bit. |

The following registers show the status of the bus at the time a break condition is detected:
The field description of the ABW_xBOST register 622 (e.g. the ABW_ADBOST register, the ABW_AIBOST register, the ABW_DM1BOST register, the ABN_GDBOST register and the ABW_DM2BOST register) in accordance with an embodiment of the present invention is as shown in table 2 (listed in alphabetic order) :

**Table 2: ABW_xBOST register 622**

| **Field** | **Number of Bits** | **Type** | **Description** |
|---|---|---|---|
| **HBURST** | 3 | r | The value of the HBURST lines when the brk_out x_n trigger occurred. |
| **HPROT** | 4 | r | The value of the HPROT lines when the brk_out_x_ n trigger occurred |
| **HSIZE** | 3 | r | The value of the HSIZE lines when the brk_out_x_n trigger occurred. |
| **HTRANS** | 2 | r | The value of the HTRANS lines when the brk_out_x_n trigger occurred. |
| **HWRITE** | 1 | r | The value of the HWRITE line when the brk_out_x_n trigger occurred. High is write. Low is read. |
| **Reserved** | 1 | r | Reserved |
| **Reserved** | 18 | | |

The field description of the ABN_xADRT register (e.g. the ABW_ADADRT register, the ABW_AIADRT register, the ABW_DM1ADRT register, the ABN_GDADRT register and the ABW_DM2ADRT register) in accordance with an embodiment of the present invention is as shown in table 3 :

**Table 3: ABW_xADRT register**

| **Field** | **Number of Bits** | **Type** | **Description** |
|---|---|---|---|
| **HADDR** | 32 | r | The value of the address when the brk_out_x_n trigger occurred. |

The field description of the ABW_xGNTT register 606 (e.g. the ABW_ADGNTT register, the ABW_AIGNTT register, the ABW_DM1GNTT register, the ABW GDGNTT register and the ABW_DM2GNTT register) in accordance with an embodiment of the present invention is as shown in table 4 (listed in alphabetic order) :

**Table 4: ABW_xGNTT register 606**

| **Field** | **Number of Bits** | **Type** | **Description** |
|---|---|---|---|
| **HMASTLOCK** | 1 | RO | **Not used for processor chip: Reserved.** |
| **HMASTER** | 4 | RO | **The state of the HMASTER lines when the brk_out_x_n trigger occurred.** |

In an embodiment of the invention, the bus watcher 301 masks and compares groups of bus signals with break values in registers. Each group generates internal break event signals. The internal break event signals are processed in a final mask and select stage 609 according to the content of the ABW_xCNTL register 605.

The signal groups and their control registers for the first stage are:
- Address 1, ABW_xADR1;
- Address 2, ABW_xADR2;
- Bus Master, ABW_ADGRNT;
- Bus control signals, ABW_xBOS.

The field description of the ABW_xBOS register 603 (e.g. the ABW_ADBOS register, the ABW_AIBOS register, the ABW_DM1BOS register, the ABW_GDBOS register and the ABW_DM2BOS register) in accordance with an embodiment of the present invention is as shown in table 5 (listed in alphabetic order):

**Table 5: ABW_xBOS register 603**

| **Field** | **Number of Bits** | **Type** | **Description** |
|---|---|---|---|
| **BUFFM** | 1 | rw | If bit [BUFFM] = 1 the value of BUFFV is compared to the value on the bus. |
| **BUFFV** | 1 | rw | If bit [BUFFM] = 1 this value is compared to the value on the bus 0 = not bufferable. 1 = bufferable. |
| **CACHEM** | 1 | rw | If bit [CACHEM] = 1 the value of CACHEV is compared to the value on the bus. |
| **CACHEV** | 1 | rw | If bit [HBURSTM] = 1 this value is compared to the value on the bus 0 = not cacheable. 1 = cacheable. |
| **DATAM** | 1 | rw | If bit [DATAM] = 1 the value of DATAV is compared to the value on the bus. |
| **DATAV** | 1 | rw | If bit [DATAM]= 1 this value is compared to the value on the bus 0 = opcode fetch. 1 = data access. |
| **HBURSTM** | 1 | rw | If bit [HBURSTM] = 1 the value of HBURSTV is compared to the value on the bus. |
| **HBURSTV** | 3 | rw | Burst type and length according to ARM AMBA AHB specification. If bit [HBURSTM] = 1 this value is compared to the value on the bus. |
| **HSIZEM** | 1 | rw | If bit [HSIZEM] = 1 the value of HSIZEV is compared to the value on the bus. |
| **HSIZEV** | 3 | rw | Transfer size according to ARM AMBA AHB specification. If bit [HSIZEM] |
| | | | = 1 this value is compared to the value on the bus. |
| **HTRANSM** | 1 | rw | If bit [HTRANSM] = 1 the value of HTRANSV is compared to the value on the bus. |
| **HTRANSV** | 2 | rw | Transfer type according to ARM AMBA AHB specification. If bit [HTRANSM] = 1 this value is compared to the value on the bus. |
| **HWRITEM** | 1 | rw | If bit [HWRITEM] = 1 the value of HWRITEV is compared to the value on the bus. |
| **HWRITEV** | 1 | rw | If bit [HWRITEM] = 1 this value is compared to the value on the bus 0 = read. 1 = write. |
| **PRIVM** | 1 | rw | If bit [PRIVM] = 1 the value of PRIVV is compared to the value on the bus. |
| **PRIVV** | 1 | rw | If bit [PRIVM] = 1 this value is compared to the value on the bus 0 = user access. 1 = privileged access. |
| **Reserved** | 1 | | Reserved |
| **Reserved** | 2 | | Reserved |
| **Reserved** | 2 | | |
| **Reserved** | 2 | | |
| **Reserved** | 1 | rw | |
| **Reserved** | 3 | | |

In the lower half of the ABW_xBOS register 603 the bus control signals which can lead to a break event are defined in value fields and bits with suffix "V". They are directly equivalent to AHB signals defined in the ARM AMBA AHB signal list.

In the upper half of the ABW_xBOS register 603 mask bits with suffix "M" are defined for each field or single bit in the lower half of the ABW_xBOS register 603. If a mask bit is high, then the bit or field it controls is compared to the equivalent bus values as part of the break event decision. If a mask bit is low, then the bit or field it controls is not used as part of the break event decision and the signals it controls are "don't care".

A bus control signal break event is only active if all enabled bus control fields are identical to their equivalent bus signals. When no field is enabled, the bus control signal break event is also active. The final break condition selection is controlled by the ABW_xCNTL register 605.

The field description of the ABW_xADR2 register 602 (e.g. the ABW_ADADR2 register, the ABM_AIADR2 register, the ABW_DM1ADR2 register, the ABW_GDADR2 register and the ABW_DM2ADR2 register) in accordance with an embodiment of the present invention is as shown in table 6:

**Table 6: ABW_xADR2 register 602**

| **Field** | **Number of Bits** | **Type** | **Description** |
|---|---|---|---|
| **ADR2** | 32 | rw | Address 2 for the brk_out_x_n_trigger. If the AHB bus address <= or = to ADR2 signals are generated for the second break condition stage controlled by the **ABW_xCNTL** register. |

The field description of the ABW_xADR1 register 601 (e.g. the ABW_ADADR1 register, the ABW_AIADR1 register, the ABW_DM1ADR1 register, the ABW_GDADR1 register and the ABN_DM2ADR1 register) in accordance with an embodiment of the present invention is as shown in table 7:

**Table 7: ABW_xADR1 register 601**

| **Field** | **Number of Bits** | **Type** | **Description** |
|---|---|---|---|
| **ADR1** | 32 | rw | Address 1 for the brk_out_x_n_trigger. If the AHB bus address >= or = to ADR1 signals are generated for the second break condition stage controlled by the **ABW_xCNTL** register. |

The field description of the ABW_xGRNT register 604 (e.g. the ABW_ADGRNT register, the ABW_AIGRNT register, the ABW_DMGRNT register, the ABW_GDGRNT register and the ABW_DM2GRNT register) in accordance with an embodiment of the present invention is as shown in table 8 (listed in alphabetic order) :

**Table 8: ABW_xGRNT register 604**

| **Field** | **Number of Bits** | **Type** | **Description** |
|---|---|---|---|
| **HMASTLM** | 1 | rw | Reserved: Not used in processor chip. |
| **HMASTLV** | 1 | rw | Reserved: Not used in processor chip. |
| **HMASTM** | 1 | rw | If bit [HMASTM] = 1 the value of HMASTV is compared to the value on the bus. |
| **HMASTV** | 4 | rw | If bit [HMASTM] = 1 this value is compared to the master number from the bus arbiter. |

The field description of the ABW_xCNTL register 605 (e.g. the ABW_ADCNTL register, the ABW_AICNTL register, the ABW_DMCNTL register, the ABW_GDCNTL register and the ABW_DM2CNTL register) in accordance with an embodiment of the present invention is as shown in table 9 (listed in alphabetic order):

**Table 9: ABW_xCNTL register 605**

| **Field** | **Number of Bits** | **Type** | **Description** |
|---|---|---|---|
| **ADDRM** | 1 | rw | **Address range mask:** 1 Address range selection field ADDRS is used 0 Address range selection is "don't care" |
| **ADDRS** | 3 | rw | **Address range select:** 000 Address 1 OR address 2 001 Address 1 OR Above address 1 010 Address 2 OR Below address 2 011 Address 1 OR address 2 OR |
| | | | Outside 100 Address 1 OR address 2 OR Inside 101 Reserved 110 Reserved 111 Reserved |
| **BUSCONM** | 1 | rw | Bus Control Mask 1 Break condition from **ABW_xBOS** is used 0 Break condition from **ABW_xBOS** is not used |
| **BUSMASM** | 1 | rw | Bus Master Mask 1 Break condition from **ABW_xGRNT** is used 0 Break condition from **ABW_xGRNT** is not used |
| **REARM** | 1 | w0 | **Rearms brk_out_x_n trigger:, xGNTT, xADRT and xBOST reset:** Write '1' to rearm, this bit always reads '0'. |
| **Reserved** | 1 | | |
| **Reserved** | 2 | | |
| **Reserved** | 21 | | |
| **TRIG** | 1 | r | **State of brk_out_x_n trigger:** '1' armed / '0' fired, reset by writing to the RA bit. |

The foregoing description has been presented for purposes of illustration and description. It is not intended to be exhaustive or to limit the invention to the precise form disclosed, and obviously many modifications and variations are possible in light of the disclosed teaching. The described embodiments were chosen in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. Integrated circuit arrangement, comprising
• a plurality of circuit arrangement components,
• at least one coupler coupling the circuit arrangement components comprising, for each circuit arrangement component a computer bus (302-307) that is associated with the circuit arrangement component and via which the circuit arrangement component may be accessed wherein for each computer bus an address range may be set independently of the address ranges set for the other computer busses
• a coupler watcher (301) checking as to whether an access request to a circuit arrangement component has a request address, that identifies at least a part of the circuit arrangement component to which access is requested, that lies within the address range set for the computer bus associated with the circuit arrangement component to which the access is requested, and, dependent on whether the request address lies within the predetermined address range, the coupler watcher accepts the access request or generates a false access signal.

2. Integrated circuit arrangement as claimed in claim 1, the plurality of circuit arrangement components comprising at least one circuit arrangement component of a group selected from:
• volatile memory,
• non-volatile memory,
• memory controller,
• microprocessor,
• digital signal processor,
• system control logic,
• mobile radio communication module,
• crypto engine,
• serial interface,
• parallel interface,
• periphery component driver.

3. Integrated circuit arrangement as claimed in claim 1 or 2,
where at least one coupler comprising at least one data bus.

4. Integrated circuit arrangement as claimed in any of claims 1 to 3,
the at least one coupler comprising at least one address bus.

5. Integrated circuit arrangement as claimed in any of claims 1 to 4,
the coupler watcher comprising one or a plurality of address registers storing at least one address that forms the address range.

6. Integrated circuit arrangement as claimed in any of claims 1 to 5,
the address range being a range selected from a group consisting of the following address ranges:
• an address range including all addresses that are higher than a predetermined address,
• an address range including all addresses that are equal to or higher than a predetermined address,
• an address range including all addresses that are lower than a predetermined address,
• an address range including all addresses that are equal to or lower than a predetermined address,
• an address range including all addresses that lie between a first predetermined address and a second predetermined address,
• an address range including all addresses that lie between a first predetermined address and a second predetermined address, including the first predetermined address and the second predetermined address,
• an address range including all addresses that lie outside an address interval that is determined by a first predetermined address and a second predetermined address,
• an address range including all addresses that lie outside an address interval that is determined by a first predetermined address and a second predetermined address, including the first predetermined address and the second predetermined address.

7. Integrated circuit arrangement as claimed in any of claims 1 to 6,
the coupler watcher further checking as to whether an access request to one or a plurality of the circuit arrangement components has a request address that lies within another predetermined address range, and, dependent on whether the request address lies within the other predetermined address range, the coupler watcher generates an access interrupt signal for granting access to the circuit arrangement component.

8. Integrated circuit arrangement as claimed in any of claims 1 to 7, further comprising
the false access signal being an access interrupt signal.

9. Integrated circuit arrangement as claimed in any of claims 1 to 8, further comprising
a security controller denying the access to the circuit arrangement component in response to the response of the false access signal.

10. Integrated circuit arrangement as claimed in claim 9, the security controller re-setting the integrated circuit arrangement to a predetermined status, or generating an interrupt, or locking off access to a particular component.

11. Integrated circuit arrangement as claimed in claim 10, the predetermined status being a new boot status.

12. Method for monitoring access requests to an integrated circuit arrangement component of an integrated circuit arrangement, comprising a plurality of circuit arrangement components and at least one coupler coupling the circuit arrangement components, comprising, for each circuit arrangement component a computer bus (302-307) that is associated with the circuit arrangement component and via which the circuit arrangement
component may be accessed wherein for each computer bus an address range may be set independently of the address ranges set for the other computer busses, the method comprising:
• receiving (402) an access request to a circuit arrangement component,
• determining (403) a request address that identifies the at least a part of circuit arrangement component, to which access is requested,
• checking (404), by a common coupler watcher of the integrated circuit arrangement, as to whether the request address lies within the address range set for the computer bus associated with the circuit arrangement component to which the access is requested, and
• dependent on whether the request address lies within the predetermined address range, accepting the access request (406) or generating a false access signal.

13. Computer program product for monitoring access requests to an integrated circuit arrangement component of an integrated circuit arrangement, comprising a plurality of circuit arrangement components and at least one coupler coupling the circuit arrangement components, comprising, for each circuit arrangement component a computer bus (302-307) that is associated with the circuit arrangement component and via which the circuit arrangement component may be accessed wherein for each computer bus an address range may be set independently of the address ranges set for the other computer busses, the computer program product, when being executed by a processor, comprising:
• receiving (402) an access request to a circuit arrangement component,
• determining (403) a request address that identifies at least a part of the circuit arrangement component, to which access is requested,
• checking (404), by a common coupler watcher of the integrated circuit arrangement, as to whether the request address lies within the address range set for the computer bus associated with the circuit arrangement component to which the access is requested, and
• dependent on whether the request address lies within the predetermined address range, accepting the access request (406) or generating a false access signal.

## Patentansprüche

1. Integrierte Schaltungs-Anordnung, aufweisend
• eine Mehrzahl von Schaltungs-Anordnungs-Komponenten,
• mindestens einen Koppler, der die Schaltungs-Anordnungs-Komponenten koppelt, aufweisend für jede Schaltungs-Anordnungs-Komponente einen Computer-Bus (302-307), der mit der Schaltungs-Anordnungs-Komponente verbunden ist und über welchen auf die Schaltungs-Anordnungs-Komponente zugegriffen werden kann, wobei für jeden Computer-Bus ein Adress-Bereich unabhängig von den für die anderen Computer-Busse gesetzten Adress-Bereichen gesetzt werden kann
• einen Koppler-Beobachter (301), der überprüft, ob eine Zugriffs-Anforderung auf eine Schaltungs-Anordnungs-Komponente eine Anforderungs-Adresse hat, die mindestens einen Teil der Schaltungs-Anordnungs-Komponente, auf die der Zugriff angefordert wird, identifiziert, die innerhalb des für den Computer-Bus, verbunden mit der Schaltungs-Anordnungs-Komponente, auf die Zugriff angefordert wird, gesetzten Adress-Bereichs liegt, und wobei, abhängig davon, ob die Anforderungs-Adresse innerhalb des vorgegebenen Adress-Bereichs liegt, der Koppler-Beobachter die Zugriffs-Anforderung akzeptiert oder ein Falscher-Zugriff-Signal erzeugt.

2. Integrierte Schaltungs-Anordnung wie in Anspruch 1 beansprucht,
wobei die Mehrzahl von Schaltungs-Anordnungs-Komponenten mindestens eine Schaltkreis-Anordnungs-Komponente enthält ausgewählt aus einer Gruppe von:
• flüchtigem Speicher,
• nicht-flüchtigem Speicher,
• Speicher-Steuerungseinrichtung,
• Mikroprozessor,
• Digital-Signal-Prozessor,
• System-Steuer-Logik,
• Mobilfunkkommunikationsmodul,
• Schlüssel-Engine,
• serieller Schnittstelle,
• paralleler Schnittstelle,
• Peripherie-Komponente-Treiber.

3. Integrierte Schaltungs-Anordnung wie in Anspruch 1 oder 2 beansprucht,
wobei mindestens ein Koppler mindestens einen Daten-Bus aufweist.

4. Integrierte Schaltungs-Anordnung wie in irgendeinem der Ansprüche 1 bis 3 beansprucht,
wobei der mindestens eine Koppler mindestens einen Adress-Bus aufweist.

5. Integrierte Schaltungs-Anordnung wie in irgendeinem der Ansprüche 1 bis 4 beansprucht,
wobei der Koppler-Beobachter aufweist ein oder eine Mehrzahl von Adress-Registern, die mindestens eine Adresse, die den Adress-Bereich bildet, speichern.

6. Integrierte Schaltungs-Anordnung wie in irgendeinem der Ansprüche 1 bis 5 beansprucht,
wobei der Adress-Bereich ein Adress-Bereich ist ausgewählt aus einer Gruppe bestehend aus den folgenden Adress-Bereichen:
• einem Adress-Bereich enthaltend alle Adressen, die höher als eine vorgegebene Adresse sind,
• einem Adress-Bereich enthaltend alle Adressen, die gleich einer oder höher als eine vorgegebene(n) Adresse sind,
• einem Adress-Bereich enthaltend alle Adressen, die niedriger als eine vorgegebene Adresse sind,
• einem Adress-Bereich enthaltend alle Adressen, die gleich einer oder niedriger als eine vorgegebene Adresse sind,
• einem Adress-Bereich enthaltend alle Adressen, die zwischen einer ersten vorgegebenen Adresse und einer zweiten vorgegebenen Adresse liegen,
• einem Adress-Bereich enthaltend alle Adressen, die zwischen einer ersten vorgegebenen Adresse und einer zweiten vorgegebenen Adresse liegen, einschließlich der ersten vorgegebenen Adresse und der zweiten vorgegebenen Adresse,
• einem Adress-Bereich enthaltend alle Adressen, die außerhalb eines Adress-Bereichs, der bestimmt wird von einer ersten vorgegebenen Adresse und einer zweiten vorgegebenen Adresse, liegen,
• einem Adress-Bereich enthaltend alle Adressen, die außerhalb eines Adress-Bereichs, der bestimmt wird von einer ersten vorgegebenen Adresse und einer zweiten vorgegebenen Adresse, liegen, einschließlich der ersten vorgegebenen Adresse und der zweiten vorgegebenen Adresse.

7. Integrierte Schaltungs-Anordnung wie in irgendeinem der Ansprüche 1 bis 6 beansprucht,
wobei der Koppler-Beobachter ferner überprüft, ob eine Zugriffs-Anforderung auf eine oder eine Mehrzahl der Schaltungs-Anordnungs-Komponenten eine Anforderungs-Adresse hat, die innerhalb eines anderen vorgegebenen Adress-Bereichs liegt, und, abhängig davon, ob die Anforderungs-Adresse innerhalb des anderen vorgegebenen Adress-Bereichs liegt, der Koppler-Beobachter ein Zugriffs-Unterbrechungs-Signal zum Gewähren von Zugriff auf die Schaltungs-Anordnungs-Komponente erzeugt.

8. Integrierte Schaltungs-Anordnung wie in irgendeinem der Ansprüche 1 bis 7 beansprucht, ferner aufweisend das Falscher-Zugriff-Signal ein Zugriff-Unterbrechungs-Signal seiend.

9. Integrierte Schaltungs-Anordnung wie in irgendeinem der Ansprüche 1 bis 8 beansprucht, ferner aufweisend
eine Sicherheits-Steuerungseinrichtung, die den Zugriff auf die Schaltungs-Anordnungs-Komponente in Antwort auf die Antwort des Falscher-Zugriff-Signals verweigert.

10. Integrierte Schaltungs-Anordnung wie in Anspruch 9 beansprucht,
wobei die Sicherheits-Steuerungseinrichtung die integrierte Schaltungs-Anordnung auf einen vorgegebenen Status zurücksetzt oder eine Unterbrechung erzeugt oder den Zugriff zu einer bestimmten Komponente abschneidet.

11. Integrierte Schaltungs-Anordnung wie in Anspruch 10 beansprucht,
wobei der vorgegebene Status ein Neu-Hochfahren-Status ist.

12. Verfahren zum Überwachen von Zugriffs-Anforderungen auf eine integrierte Schaltungs-Anordnungs-Komponente einer integrierten Schaltungs-Anordnung, aufweisend eine Mehrzahl von Schaltungs-Anordnungs-Komponenten und mindestens einen Koppler, der die Schaltungs-Anordnungs-Komponenten koppelt, aufweisend, für jede Schaltungs-Anordnungs-Komponente einen Computer-Bus (302-307), der mit der Schaltungs-Anordnungs-Komponente verbunden ist und über welchen auf die Schaltungs-Anordnungs-Komponente zugegriffen werden kann, wobei für jeden Computer-Bus ein Adress-Bereich unabhängig von den für die anderen Computer-Busse gesetzten Adress-Bereichen gesetzt werden kann, das Verfahren aufweisend:
• Empfangen (402) einer Zugriffs-Anforderung auf eine Schaltkreis-Anordnungs-Komponente,
• Ermitteln (403) einer Anforderungs-Adresse, die den mindestens einen Teil der Schaltungs-Anordnungs-Komponente, zu der Zugriff angefordert wird, identifiziert,
• Überprüfen (404), durch einen gemeinsamen Koppler-Beobachter der integrierten Schaltungs-Anordnung, ob die Anforderungs-Adresse innerhalb des für den Computer-Bus, verbunden mit der Schaltungs-Anordnungs-Komponente, auf die der Zugriff angefordert wird, gesetzten Adress-Bereichs liegt, und
• abhängig davon, ob die Anforderungs-Adresse innerhalb des vorgegebenen Adress-Bereichs liegt, Akzeptieren der Zugriffs-Anforderung (406) oder Erzeugen eines Falscher-Zugriff-Signals.

13. Computer-Programm-Produkt zum Überwachen von Zugriffs-Anforderungen auf eine integrierte Schaltungs-Anordnungs-Komponente einer integrierten Schaltungs-Anordnung, aufweisend eine Mehrzahl von Schaltungs-Anordnungs-Komponenten und mindestens einen Koppler, der die Schaltungs-Anordnungs-Komponenten koppelt, aufweisend, für jede Schaltungs-Anordnungs-Komponente einen Computer-Bus (302-307), der mit der Schaltungs-Anordnungs-Komponente verbunden ist und über welchen auf die Schaltungs-Anordnungs-Komponente zugegriffen werden kann, wobei für jeden Computer-Bus ein Adress-Bereich unabhängig von den für die anderen Computer-Busse gesetzten Adress-Bereichen gesetzt werden kann, das Computer-Programm-Produkt, wenn es von einem Prozessor ausgeführt wird, aufweisend:
• Empfangen (402) einer Zugriffs-Anforderung auf eine Schaltkreis-Anordnungs-Komponente,
• Ermitteln (403) einer Anforderungs-Adresse, die mindestens einen Teil der Schaltungs-Anordnungs-Komponente, zu der Zugriff angefordert wird, identifiziert,
• Überprüfen (404), durch einen gemeinsamen Koppler-Beobachter der integrierten Schaltungs-Anordnung, ob die Anforderungs-Adresse innerhalb des für den Computer-Bus, verbunden mit der Schaltungs-Anordnungs-Komponente, auf die der Zugriff angefordert wird, gesetzten Adress-Bereichs liegt, und
• abhängig davon, ob die Anforderungs-Adresse innerhalb des vorgegebenen Adress-Bereichs liegt, Akzeptieren der Zugriffs-Anforderung (406) oder Erzeugen eines Falscher-Zugriff-Signals.

## Revendications

1. Agencement de circuit intégré comprenant
• une pluralité de composants d'agencement de circuit,
• au moins un coupleur couplant les composants d'agencement de circuit et comprenant, pour chaque composant d'agencement de circuit, un bus (302 à 307) d'ordinateur, qui est associé aux composants d'agencement de circuit et par lequel il peut être accédé aux composants d'agencement de circuit, dans lequel, pour chaque bus d'ordinateur, un domaine d'adresse peut être fixé indépendamment des domaines d'adresse fixés pour les autres bus d'ordinateur
• un veilleur (301) de coupleur contrôlant si une demande d'accès à un composant d'agencement de circuit a une adresse de demande qui identifie au moins une partie du composant d'agencement de circuit auquel l'accès est demandé, qui se trouve dans le domaine d'adresse fixé pour le bus d'ordinateur associé au composant d'agencement de circuit auquel l'accès est demandé et, suivant que l'adresse de demande se trouve dans le domaine d'adresse déterminé à l'avance, le veilleur de coupleur accepte la demande d'accès ou produit un faux signal d'accès.

2. Agencement de circuit intégré suivant la revendication 1, la pluralité de composants d'agencement de circuit comprenant au moins un composant d'agencement de circuit d'un groupe choisi parmi :
• mémoire volatile,
• mémoire non volatile,
• contrôleur de mémoire,
• microprocesseur,
• processeur numérique de signal,
• logique de commande de système,
• module de communication par téléphonie mobile,
• moteur de chiffrement,
• interface série,
• interface parallèle,
• circuit d'attaque de composants en périphérie.

3. Agencement de circuit intégré suivant la revendication 1 ou 2,
dans lequel au moins un coupleur comprend au moins un bus de données.

4. Agencement de circuit intégré suivant l'une ou quelconque des revendications 1 à 3,
dans lequel le au moins un coupleur comprend au moins un bus d'adresse.

5. Agencement de circuit intégré suivant l'une ou quelconque des revendications 1 à 4,
dans lequel le veilleur de coupleur comprend au moins un ou une pluralité de registres d'adresse, mémorisant au moins une adresse qui forme le domaine d'adresse.

6. Agencement de circuit intégré suivant l'une ou quelconque des revendications 1 à 5,
le domaine d'adresse étant un domaine choisi dans un groupe consistant en les domaines d'adresse suivants :
• un domaine incluant toutes les adresses qui sont supérieures à une adresse déterminée à l'avance,
• un domaine d'adresse comprenant toutes les adresses qui sont supérieures ou égales à une adresse déterminée à l'avance,
• un domaine d'adresse incluant toutes les adresses qui sont plus petites qu'une adresse déterminée à l'avance,
• un domaine d'adresse incluant toutes les adresses qui sont inférieures ou égales à une adresse déterminée à l'avance,
• un domaine d'adresse incluant toutes les adresses qui se trouvent entre une première adresse déterminée à l'avance et une deuxième adresse déterminée à l'avance,
• un domaine d'adresse incluant toutes les adresses qui se trouvent entre une première adresse déterminée à l'avance et une deuxième adresse déterminée à l'avance, y compris la première adresse déterminée à l'avance et la deuxième adresse déterminée à l'avance,
• un domaine d'adresse incluant toutes les adresses qui se trouvent à l'extérieur d'un intervalle d'adresse qui est déterminé par une première adresse déterminée à l'avance et par une deuxième adresse déterminée à l'avance,
• un domaine d'adresse incluant toutes les adresses qui se trouvent à l'extérieur d'un intervalle d'adresse qui est déterminé par une première adresse déterminée à l'avance et par une deuxième adresse déterminée à l'avance, y compris la première adresse déterminée à l'avance et la deuxième adresse déterminée à l'avance.

7. Agencement de circuit intégré suivant l'une ou quelconque des revendications 1 à 6,
le veilleur de coupleur contrôlant, en outre, si une demande d'accès à l'un ou à plusieurs des composants de l'agencement de circuit a une adresse de demande qui se trouve dans un autre domaine d'adresse déterminé à l'avance, et, selon que l'adresse de demande se trouve dans l'autre domaine d'adresse déterminé à l'avance, le veilleur de coupleur produit un signal d'interruption d'accès pour accorder accès au composant d'agencement de circuit.

8. Agencement de circuit intégré suivant l'une ou quelconque des revendications 1 à 7, comprenant en outre le fait
que le faux signal d'accès est un signal d'interruption d'accès.

9. Agencement de circuit intégré suivant l'une ou quelconque des revendications 1 à 8, comprenant en outre
un dispositif de commande de sécurité déniant l'accès au composant d'agencement de circuit en réaction à la réaction du faux signal d'accès.

10. Agencement de circuit intégré suivant la revendication 9,
dans lequel le dispositif de commande de sécurité remet l'agencement de circuit intégré à un statut déterminé à l'avance ou produit une interruption ou un verrouillage d'accès à un composant particulier.

11. Agencement de circuit intégré suivant la revendication 10,
dans lequel le statut déterminé à l'avance est un nouveau statut d'amorçage.

12. Procédé de contrôle de demande d'accès à un composant d'agencement de circuit intégré d'un agencement de circuit intégré, comprenant une pluralité de composants d'agencement de circuit et au moins un coupleur couplant les composants d'agencement de circuit, comprenant, pour chaque composant d'agencement de circuit, un bus (302 à 307) d'ordinateur, qui est associé au composant d'agencement de circuit et par lequel il peut être accédé au composant d'agencement de circuit, dans lequel, pour chaque bus d'ordinateur, un domaine d'adresse peut être fixé indépendamment des domaines d'adresse fixés pour les autres bus d'ordinateur, procédé dans lequel :
• on reçoit (402) une demande d'accès à un composant d'agencement de circuit,
• on détermine (403) une adresse de demande, qui identifie la au moins une partie d'un composant d'agencement de circuit auquel l'accès est demandé,
• on contrôle (404), par un veilleur commun de coupleur de l'agencement de circuit intégré, si l'adresse de demande se trouve dans le domaine d'adresse fixé pour le bus d'ordinateur associé au composant de l'agencement de circuit auquel l'accès est demandé, et
• suivant que l'adresse de demande se trouve dans le domaine d'adresse déterminé à l'avance, on accepte la demande (406) d'accès ou on produit un faux signal d'accès.

13. Produit de programme informatique pour contrôler des demandes d'accès à un composant d'agencement de circuit intégré d'un agencement de circuit intégré, comprenant une pluralité de composants d'agencement de circuit et au moins un coupleur couplant les composants d'agencement de circuit, comprenant, pour chaque composant d'agencement de circuit, un bus (302 à 307) d'ordinateur, qui est associé au composant d'agencement du circuit et par lequel il peut être accédé au composant d'agencement, dans lequel, pour chaque bus d'ordinateur, un domaine d'adresse peut être fixé indépendamment des domaines d'adresse fixés pour les autres bus d'ordinateur, le produit de programme informatique, lorsqu'il est exécuté par un processeur comprenant les stades dans desquels
• on reçoit (402) une demande d'accès à un composant d'agencement de circuit,
• on détermine (403) une adresse de demande qui identifie la au moins une partie d'un composant d'agencement de circuit auquel l'accès est demandé,
• on contrôle (404), par un veilleur commun de coupleur de l'agencement de circuit intégré, si l'adresse de demande se trouve dans le domaine d'adresse fixé pour le bus d'ordinateur associé au composant de l'agencement de circuit auquel l'accès est demandé, et
• suivant que l'adresse de demande se trouve dans le domaine d'adresse déterminé à l'avance, on accepte la demande (406) d'accès ou on produit un faux signal d'accès.
